# EUROPÄISCHE PATENTSCHRIFT

(11) **EP 0 443 080 B1**
(45) Veröffentlichungstag und Bekanntmachung des Hinweises auf die Patenterteilung: **15.09.1993**
(21) Anmeldenummer: 90115981.4
(22) Anmeldetag: 21.08.1990
(51) Int. Cl.: B60S 1/08

(54) **Verfahren und Anordnung zur Steuerung eines Scheibenwischers**
Method and means of controlling a windscreen wiper
Procédé et moyens de commande d'une essuie-glace

(30) Priorität: 12.01.1990 DE 4000736
(43) Veröffentlichungstag der Anmeldung: 28.08.1991
(73) Patentinhaber: VDO Adolf Schindling AG, D-60487 Frankfurt (DE)
(72) Erfinder: Wallrafen, Werner, D-6231 Sulzbach (DE)
(74) Vertreter: Klein, Thomas, Dipl.-Ing. (FH)

(56) Entgegenhaltungen:
- EP-A- 0 102 622
- EP-A- 0 333 564
- WO-A-83/02093
- DE-A- 2 630 470
- DE-A- 3 314 770
- DE-A- 3 538 553
- US-A- 4 636 643
- US-A- 4 703 237
- US-A- 4 740 735

## Beschreibung

Die Erfindung betrifft ein Verfahren und eine Anordnung zur Steuerung eines Scheibenwischers, insbesondere an einem Kraftfahrzeug, wobei der Scheibenwischer in Abhängigkeit von der Regenintensität automatisch eingeschaltet wird.

Es sind Einrichtungen zur Steuerung von Scheibenwischern bekanntgeworden (beispielsweise aus der DE-A-33 14 770), bei welchen beim Überschreiten einer vorgegebenen Schwelle der Regenbenetzung auf der Frontscheibe der Scheibenwischermotor selbsttätig anläuft. Zum Erkennen der Benetzung auf der Frontscheibe sind verschiedene Sensoren bekanntgeworden, bei denen jedoch verschiedene Störeinflüsse, wie beispielsweise Temperaturabhängigkeiten, Langzeitdriften, Fertigungstoleranzen und fahrzeugspezifische Unterschiede, zu Fehlern führen.

Mit der EP-A-0 333 564 ist eine Steuerung eines Scheibenwischers bekannt geworden, wobei ein die Intensität des Regens erkennender Sensor ein Signal abgibt und wobei der Scheibenwischer in Abhängigkeit von der Regenintensität automatisch gesteuert wird. Der kapazitiv arbeitende Sensor ist Bestandteil eines Schwingkreises. Dessen Ausgangsfrequenz, die proportional zur kapazität, d.h. zum Vorhandensein von Wasser auf dem Sensor ist, und deren Variation in der Periode von der Größe der Tropfen und deren Stoß auf den Sensor abhängt, wird einer Auswerte schaltung zugeführt. Die Auswerteschaltung leitet hieraus unter anderen die Regen intensität ab.

Aufgabe der vorliegenden Erfindung ist es, eine Steuerung eines Scheibenwischers in Abhängigkeit von der Regenintensität ohne Verfälschungen durch die obengenannten Störeinflüsse zu ermöglichen.

Die Aufgabe ist durch die Merkmale der Ansprüche 1 und 10 gelöst. Weitere Merkmale sind den Unteransprüchen zu entnehmen.

Das erfindungsgemäße Verfahren ist dadurch gekennzeichnet, daß als Maß für die Regenintensität die frequenzbegrenzte Signalvariation eines Sensors dient. Dabei kann entweder vorgesehen sein, daß das Signal über einen Bandpaß geleitet wird und daß der Effektivwert des bandbegrenzten Signals gebildet wird. Oder es kann vorgesehen sein, daß ein Mittelwert des Signals gebildet wird und daß die Varianz oder die Standardabweichung des jeweiligen Signals vom Mittelwert berechnet wird.

Der Erfindung liegt die Erkenntnis zugrunde, daß ständige Bewegungen von Wassertropfen stochastische Signale erzeugen, die bei Trockenheit eindeutig ausbleiben.

Gemäß einer Weiterbildung der Erfindung wird ein Maß für den aufsummierten Regen dadurch gewonnen, daß die Größe der jeweiligen ermittelten Signalvariation integriert wird. Dabei kann vorzugsweise vorgesehen sein, daß nach jedem Wischvorgang die Integration neu beginnt.

Eine andere Weiterbildung der Erfindung besteht darin, daß im Anschluß an die Integration eine Differentiation mit großer Zeitkonstante zur Kompensation der Wasserverdunstung erfolgt.

Ferner kann gemäß einer anderen Weiterbildung eine Verfälschung des Ergebnisses durch ohne die Mitwirkung von Wassertropfen entstehende stochastische Signale dadurch verhindert werden, daß nur einen Schwellwert übersteigende Werte der Signalvariation integriert werden.

Bei einer weiteren Fortbildung der Erfindung ist vorgesehen, daß eine Signalvariation, die kleiner als ein vorgegebener Schwellwert ist, als trockene Scheibe detektiert wird und daß das zu diesem Zeitpunkt vorliegende Sensorsignal als Vergleichswert für spätere Auslösekriterien dient. Vorzugsweise wird dabei der Scheibenwischer eingeschaltet, wenn das Sensorsignal den Vergleichswert überschreitet.

Eine vorteilhafte Anordnung zur Durchführung des Verfahrens besteht darin, daß der Sensor über einen Analog/Digital-Wandler mit einem Mikrocomputer verbunden ist und daß für den Mikrocomputer ein Programm nach dem erfindungsgemäßen Verfahren vorgesehen ist. Dabei ist vorzugsweise der Sensor ein kapazitiver Feuchtesensor.

Die Erfindung läßt zahlreiche Ausführungsformen zu. Zwei davon sind schematisch in der Zeichnung anhand mehrerer Figuren dargestellt und nachfolgend beschrieben. Es zeigt:
- Fig. 1: ein Blockschaltbild einer Anordnung zur Durchführung des erfindungsgemäßen Verfahrens,
- Fig. 2: ein Flußdiagramm eines für den Mikrocomputer in der Anordnung nach Fig. 1 vorgesehenen Programms und
- Fig. 3: ein zweites Flußdiagramm.

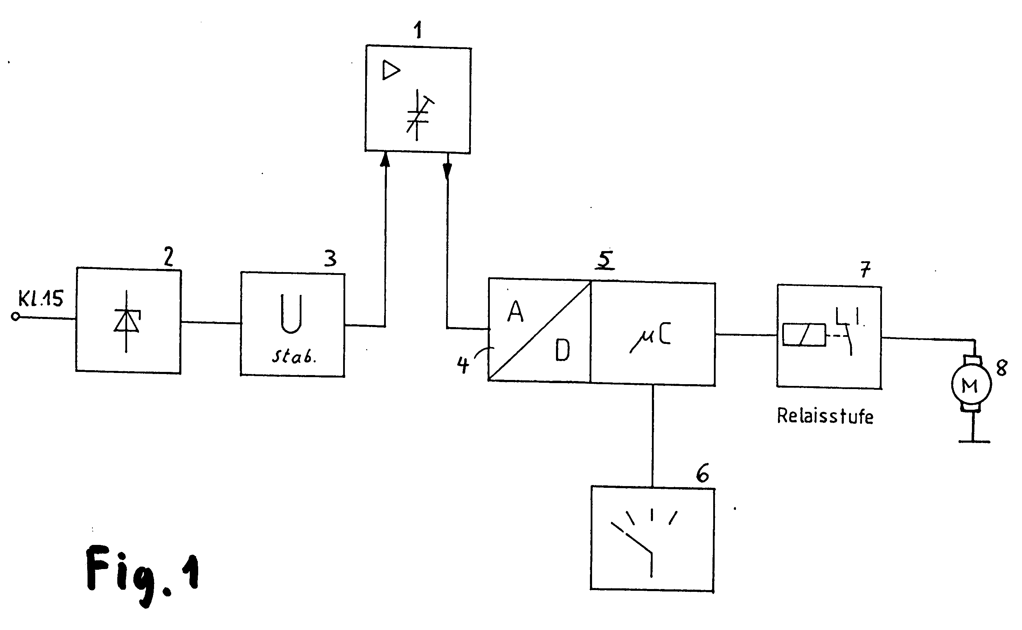

Bei der in Fig. 1 dargestellten Einrichtung wird der Grad der Benetzung der Frontscheibe mit Hilfe eines kapazitiven Sensors 1 ermittelt, dem über die Klemme 15 des Bordnetzes, über ein Störspannungsfilter 2 und über eine Stabilisierungsschaltung 3 Betriebsspannung zugeführt wird. Kapazitive Feuchtesensoren sind an sich bekannt und brauchen zum Verständnis der vorliegenden Erfindung im einzelnen nicht näher erläutert zu werden. Dem Sensor 1 ist ein Verstärker zugeordnet, so daß die Ausgangsspannung des Sensors unmittelbar einem Analog/Digital-Wandler 4 eines sogenannten Einchip-Mikrocomputers 5 zugeführt wird. Der Mikrocomputer 5 ist mit einem Bedienschalter 6 verbunden, der vorzugsweise als Lenkstockschalter ausgeführt ist und rastende Stellungen für Dauerbetrieb und automatischen Betrieb sowie eine Taststellung für einen einmaligen Wischvorgang aufweist. Über eine Relais-Stufe 7 ist der Motor 8 eines im übrigen nicht dargestellten Scheibenwischers an einen Ausgang des Mikrocomputers 5 angeschlossen.

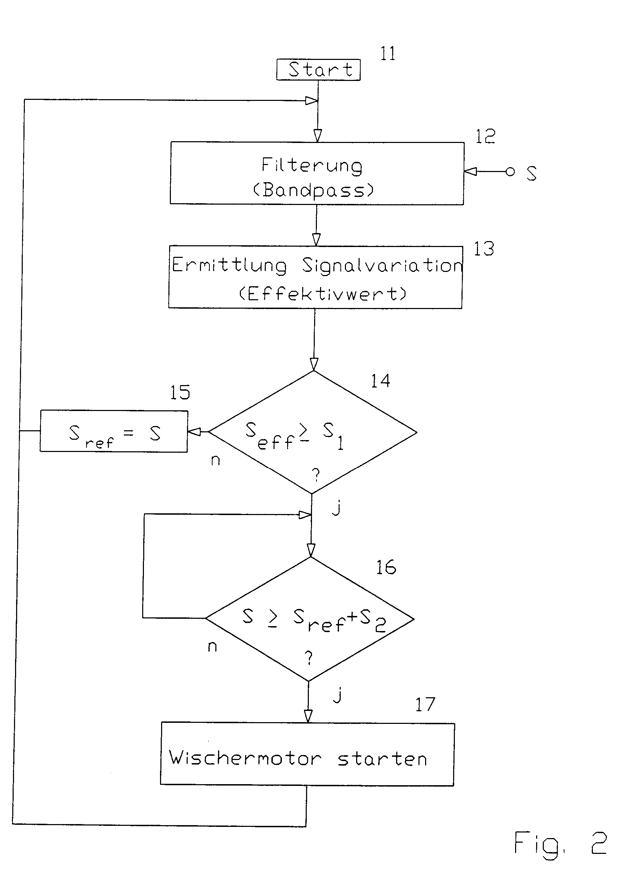

Bei dem in Fig. 2 dargestellten Programm wird zunächst durch Auswertung der Variation im Sensorsignal S ein Vergleichswert für das Sensorsignal festgelegt und anschließend durch Vergleich des aktuellen Sensorsignals S mit dem Vergleichswert ein Signal zum Einschalten des Wischermotors erzeugt. Dazu wird nach einem Start des Programms bei 11 im Programmteil 12 ein Wert für S eingelesen und zusammen mit den vorangegangenen Werten bandpaßgefiltert. Danach wird bei 13 die Signalvariation des gefilterten Signals S ermittelt. Dieses kann beispielsweise der Effektivwert sein. Der somit erhaltene Wert S_{eff} wird mit einem ersten Schwellwert S₁ verglichen. Dieser Schwellwert ist etwas größer als die stochastischen Schwankungen (Rauschen), die sich im Sensorsignal bei trockener Scheibe ergeben.

Überschreitet der Wert S_{eff} den ersten Schwellwert S₁, so ist dieses ein eindeutiges Anzeichen dafür, daß Regen vorliegt. Nach der Verzweigung 14 wird im Programmteil 15 ein zu speichernder Vergleichswert S_{ref} dem aktuellen statischen Sensorsignal S gleichgesetzt. Dieser Vergleichswert S_{ref} charakterisiert eindeutig das statische Sensorsignal S bei trockener Scheibe. Daraufhin wird, beginnend mit der Filterung 12, das bisher beschriebene Programm solange wiederholt, bis bei Auftreten von Regen der Effektivwert S_{eff} den Schwellwert S₁ überschreitet. Danach wird bei 16 geprüft, ob das aktuelle Sensorsignal S größer oder gleich dem gespeicherten Vergleichswert S_{ref} zuzüglich eines zweiten Schwellwertes S₂ ist. Damit ist unabhängig von den eingangs erwähnten Störgrößen festgestellt, daß Regen vorliegt, so daß bei 17 der Scheibenwischer gestartet werden kann.

Bei dem erfindungsgemäßen Verfahren kann der Scheibenwischer an sich auf verschiedene Weise abgeschaltet werden. Vorteilhafter Weise kann vorgesehen sein, daß der Scheibenwischer jeweils eine Wischbewegung ausführt und mit dem erfindungsgemäßen Verfahren jeweils neu gestartet wird. Dabei ergibt sich bei stärkerem Regen eine kontinuierliche Wischbewegung, da dann ein Signal zum Starten des Wischers möglichweise bereits während des Wischvorgangs erzeugt wird.

Anstelle der Bandpaßfilterung im Programmteil 12 kann an sich auch eine Tiefpaßfilterung vorgesehen sein. Die Bandpaßfilterung hat jedoch den Vorteil, daß höherfrequente Bandteile des Sensorsignals, die nicht durch die Fluktuation der Regentropfen bedingt sind, unterdrückt werden. Dieses können beispielsweise steile Flanken des Sensorsignals sein, die entstehen, wenn der Scheibenwischer den Sensor überstreicht.

Anhand des folgenden Zahlenbeispiels, welches an praktische Versuche angelehnt ist, soll der Vorteil des erfindungsgemäßen Verfahrens noch einmal veranschaulicht werden. Das Sensorsignal weist beispielsweise eine Größe von 1 V bei trockener Scheibe und von 3 V bei regennasser Scheibe auf. Ohne das erfindungsgemäße Verfahren müßte ein Schwellwert zwischen diesen beiden Werten liegen - beispielsweise bei 2 V. Die zuvor erwähnten Einflüsse, wie Temperatur, Alterung oder Verschmutzung der Scheibe können jedoch eine Veränderung des Sensorsignals bis zu 100 % bewirken. Die Signalvariation verändert sich jedoch bei Vorliegen von Regen wesentlich stärker. Der Effektivwert ist beispielsweise bei trockener Scheibe < 2 mV und bei Regen circa 20 mV. Selbst wenn das Sensorsignal S den gleichen relativen störenden Veränderungen unterworfen ist, ist eine eindeutige Erfassung mit Hilfe eines Schwellwertes von beispielsweise S₁ = 5 mV möglich.

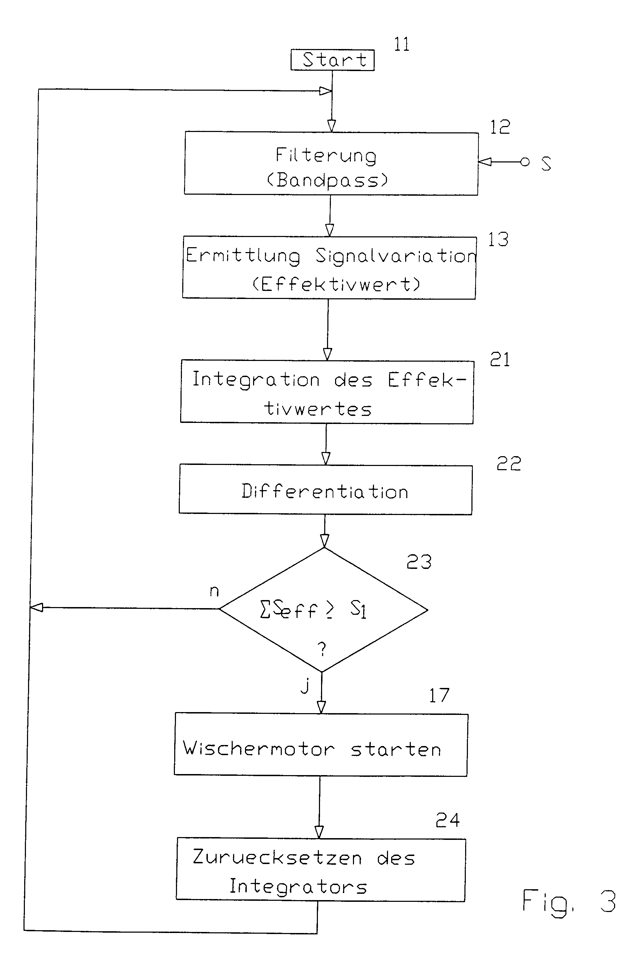

Bei dem in Fig. 3 dargestellten Programm wird wie bei dem Programm nach Fig. 2 zunächst bei 12 eine Filterung und bei 13 eine Ermittlung der Signalvariation vorgenommen. Der somit ermittelte Wert S_{eff} wird bei 21 integriert, womit praktisch die durch das Auftreffen einzelner Regentropfen auf die Scheibe erfolgende Ansammlung von Wasser nachgebildet wird. Der Integration überlagert ist eine Differentiation mit einer großen Zeitkonstante bei 22, welche die Verdunstung des Wassers nachbildet. Die Differentiation bei 22 kann auch als Hochpaß betrachtet werden.

Nach dem Durchlaufen der Programmteile 21 und 22 wird bei 23 entschieden, ob der integrierte und differenzierte Wert ΣS_{eff} bereits einen Schwellwert S₁ erreicht hat. Solange dieses nicht der Fall ist, werden die Schritte 12, 13, 21 und 22 wiederholt. Ist jedoch ΣS_{eff} ≧ S₁, wird der Wischermotor bei 17 gestartet. Danach wird bei 24 der Integrator auf den Anfangswert zurückgesetzt, worauf sich, beginnend mit der Filterung 12, das Programm wiederholt.

## Patentansprüche

1. Verfahren zur Steuerung eines Scheibenwischers, insbesondere an einem Kraftfahrzeug, wobei ein die Intensität des Regens erkennender Sensor (1) ein Signal (S) abgibt, und wobei der Scheibenwischer in Abhängigkeit von der Regenintensität automatisch gesteuert wird, dadurch gekennzeichnet, daß eine von den durch die ständigen Bewegungen von Wassertropfen erzeugten stochastischen Signalen bewirkte Signalvariation im frequenzbegrenzten Signal des Sensors (1) als Maß für die Regenintensität dient.

2. Verfahren nach Anspruch 1, dadurch gekennzeichnet, daß das Signal (S) über einen Bandpaß geleitet wird und daß der Effektivwert (S_{eff}) des bandbegrenzten Signals gebildet wird.

3. Verfahren nach Anspruch 1, dadurch gekennzeichnet, daß ein Mittelwert des Signals (S) gebildet wird und daß die Varianz oder die Standardabweichung des jeweiligen Signals (S) vom Mittelwert berechnet wird.

4. Verfahren nach einem der vorhergehenden Ansprüche 2 oder 3, dadurch gekennzeichnet, daß die Größe der jeweiligen ermittelten Signalvariation (S_{eff}) integriert wird und der Scheibenwischer eingeschaltet wird, wenn die integrierte Größe einen Schwellwert überschreitet.

5. Verfahren nach Anspruch 4, dadurch gekennzeichnet, daß nach jedem Wischvorgang die Integration neu beginnt.

6. Verfahren nach einem der Ansprüche 4 oder 5, dadurch gekennzeichnet, daß im Anschluß an die Integration eine Differentiation mit großer Zeitkonstante zur Kompensation der Wasserverdunstung erfolgt.

7. Verfahren nach einem der Ansprüche 4 bis 6, dadurch gekennzeichnet, daß nur einen Schwellwert übersteigende Werte der Signalvariation integriert werden.

8. Verfahren nach einem der Ansprüche 1 bis 3, dadurch gekennzeichnet, daß eine Signalvariation, die kleiner als ein vorgegebener Schwellwert (S₁) ist, als trockene Scheibe detektiert wird und daß das zu diesem Zeitpunkt vorliegende Sensorsignal (S) als Vergleichswert (S_{ref}) für spätere Auslösekriterien dient.

9. Verfahren nach Anspruch 8, dadurch gekennzeichnet, daß der Scheibenwischer eingeschaltet wird, wenn das Sensorsignal (S) den Vergleichswert (S_{ref}) überschreitet.

10. Anordnung zur Durchführung des Verfahrens nach Anspruch 1, dadurch gekennzeichnet, daß der Sensor über einen Analog/Digital-Wandler (4) mit einem Mikrocomputer (5) verbunden ist und daß für den Mikrocomputer (5) ein Programm nach dem erfindungsgemäßen Verfahren vorgesehen ist.

11. Anordnung nach Anspruch 10, dadurch gekennzeichnet, daß der Sensor ein kapazitiver Feuchtesensor (1) ist.

## Claims

1. Method of controlling a window wiper, especially on a motor vehicle, wherein a sensor (1) which detects the intensity of rain emits a signal (S), and the window wiper is controlled automatically in dependence on the rain intensity, characterised in that a variation in the frequency-limited signal of the sensor (1), which variation is effected by the random signals produced by the continual movements of the water droplets, is used as a measure of the rain intensity.

2. Method according to claim 1, characterised in that the signal (S) is conducted through a band-pass filter, and that the effective value (S_{eff}) of the limited-band signal is formed.

3. Method according to claim 1, characterised in that a mean value of the signal (S) is formed, and that the variance or the standard deviation of the respective signal (S) from the mean value is calculated.

4. Method according to one of the preceding claims 2 or 3, characterised in that the value of the respective ascertained signal variation (S_{eff}) is integrated and the window wiper is switched on when the integrated value exceeds a threshold value.

5. Method according to claim 4, characterised in that the integration begins anew after each wiping operation.

6. Method according to one of claims 4 or 5, characterised in that a differentiation with a large time constant, for compensation for water evaporation, is carried out after the integration.

7. Method according to one of claims 4 to 6, characterised in that only values of signal variation which exceed a threshold value are integrated.

8. Method according to one of claims 1 to 3, characterised in that a signal variation which is smaller than a given threshold value (S₁) is detected as a dry window, and that the sensor signal (S) present at this point in time is used as a comparison value (S_{ref}) for subsequent triggering criteria.

9. Method according to claim 8, characterised in that the window wiper is switched on when the sensor signal (S) exceeds the comparison value (S_{ref}).

10. Arrangement for carrying out the method according to claim 1, characterised in that the sensor is connected via an analog-to-digital converter (4) to a micro-computer (5) and that a programme in accordance with the method according to the invention is provided for the micro-computer (5).

11. Arrangement according to claim 10, characterised in that the sensor is a capacitive moisture sensor (1).

## Revendications

1. Procédé pour commander un essuie-glace, en particulier sur un véhicule automobile, dans lequel une sonde (1) détectant l'intensité de la pluie délivre un signal (S), et dans lequel l'essuie-glace est commandé automatiquement en fonction de l'intensité de la pluie, caractérisé par le fait qu'une variation intervenant dans le signal à fréquence limitée de la sonde (1), provoquée par les signaux stochastiques engendrés par les mouvements permanents de gouttes d'eau, sert de mesure pour l'intensité de la pluie.

2. Procédé selon la revendication 1, caractérisé par le fait que le signal (S) est dirigé par un passe-bande ; et par le fait que la valeur effective (S_{eff}) du signal, dont la bande passante est limitée, est formée.

3. Procédé selon la revendication 1, caractérisé par le fait qu'une valeur moyenne du signal (S) est formée ; et par le fait que la variance ou l'écart standard du signal (S) considéré, par rapport à la valeur moyenne, est calculé(e).

4. Procédé selon l'une des revendications précédentes 2 ou 3, caractérisé par le fait que la grandeur de la variation de signal (S_{eff}) respectivement établie est intégrée, et l'essuie-glace est enclenché lorsque la grandeur intégrée excède une valeur de seuil.

5. Procédé selon la revendication 4, caractérisé par le fait que l'intégration recommence après chaque processus de balayage.

6. Procédé selon l'une des revendications 4 ou 5, caractérisé par le fait que, dans la continuité de l'intégration, une différentiation s'opère avec une grande constante de temps, en vue de la compensation de l'évaporation d'eau.

7. Procédé selon l'une des revendications 4 à 6, caractérisé par le fait que seules sont intégrées des valeurs de la variation de signal qui excèdent une valeur de seuil.

8. Procédé selon l'une des revendications 1 à 3, caractérisé par le fait qu'une variation de signal, inférieure à une valeur de seuil préétablie (S₁), est détectée en tant que vitre sèche ; et par le fait que le signal (S) de la sonde, se présentant à cet instant, sert de valeur comparative (S_{ref}) pour des critères ultérieurs de déclenchement.

9. Procédé selon la revendication 8, caractérisé par le fait que l'essuie-glace est enclenché lorsque le signal (S) de la sonde excède la valeur comparative (S_{ref}).

10. Dispositif pour la mise en oeuvre du procédé selon la revendication 1, caractérisé par le fait que la sonde est reliée à un micro-ordinateur (5) par l'intermédiaire d'un convertisseur analogique/numérique (4) ; et par le fait qu'un programme, conforme au procédé selon l'invention, est prévu pour le micro-ordinateur (5).

11. Dispositif selon la revendication 10, caractérisé par le fait que la sonde est une sonde capacitive d'humidité (1).
